# EUROPEAN PATENT SPECIFICATION

(11) **EP 0 730 128 B1**
(45) Date of publication and mention of the grant of the patent: **23.06.1999**
(21) Application number: 96630003.0
(22) Date of filing: 11.01.1996
(51) Int. Cl.: F25B 31/00, H02K 9/00

(54) **Fuzzy logic control of liquid injection for motor cooling**
Fuzzylogikregelung der Zuführung einer Flüssigkeit für die Kühlung eines Motors
Contrôle en logique floue de l'injection du liquide pour le refroidissement d'un moteur

(30) Priority: 06.02.1995 US 383935
(43) Date of publication of application: 04.09.1996
(73) Proprietor: CARRIER CORPORATION, Syracuse New York 13221 (US)
(72) Inventor: Friday Jr.,Arthur F., Vienna, Virginia 22180 (US)
(74) Representative: Schmitz, Jean-Marie

(56) References cited:
- GB-A- 1 441 881
- US-A- 5 345 776
- PATENT ABSTRACTS OF JAPAN vol. 96, no. 1, 31 January 1996 & JP-A-07 234023 (FUJITSU GENERAL LTD), September 1995,
- PATENT ABSTRACTS OF JAPAN vol. 17, no. 322 (M-1432), 18 June 1993 & JP-A-05 034022 (MITSUBISHI ELECTRIC CORP.), 9 February 1993,

## Description

The present invention relates to control circuits, and in particular to control circuits for maintaining an operating condition of a device at or near an optimum operating level under conditions of varying load. The invention is more specifically directed to control circuits which control the rate of injection of a liquid coolant into the armature of an electric motor. An embodiment of the invention is directed to a fuzzy logic control circuit which controls the rate of injection of refrigerant liquid into the armature of an electric motor at a rate that depends on the variation of motor temperature above or below a predetermined setpoint.

Compressors for air conditioning, chilling, and heat pump systems employ heavy-duty electric motors which are designed for operation under a wide range of loads. The operating temperature of the motor tends to rise under conditions of heavy load, and falls or rises slowly under conditions of reduced load. The load imposed on the motor depends on the amount of refrigeration that is being cycled through compression and expansion, and this depends on the air conditioning or heat load. Air conditioning load varies widely from one time of day to another, and also varies with changes in weather, personnel and equipment loads, and other factors.

Screw type compressors are commonly used in large air conditioning systems, e.g., for an office building, hospital, or institution. A large air conditioning system can typically employ two to four screw-type compressors, each having a cooling capacity of 40 to 85 Tons of cooling. Each ton represents 3520 J/s (12,000 BTU/hr). This represents the amount of cooling from melting one ton of ice per hour. There are two to four screw compressors, so the system capacity is typically 80 to 375 Tons. The air conditioning load will vary throughout the day from a very low minimum up to the system maximum, and the load on each electric motor varies accordingly.

The compressor motor has one or more temperature sensors embedded in the armature windings. The motor is designed so that the temperature sensors are at the hottest part of the armature. Only one of the sensors is used at a time. The other sensor or sensors serve as spares, so that the entire motor does not need to be replaced in the case of failure of a temperature sensor.

The sensor connects to a control module, which in turn sends a control signal to a refrigerant solenoid valve. The sensor is typically of the type that has a resistance that varies with temperature. Circuitry or software in the control module converts the resistance to a temperature value. The duty cycle of the control signal to the solenoid valve is typically proportional to the detected motor temperature. The control signal has a normal-level duty cycle based on cooling needs at normal operation. The control module then varies the duty cycle up or down in proportion to the deviation of motor temperature above or below the design operating temperature or setpoint.

In the compressors that are typically employed in large chiller air conditioning systems, the motors are cooled in part by liquid refrigerant injection into the motor housing. The liquid refrigerant passes over the hot stator or armature, cooling it down. The rate of liquid injection has to be controlled with load, rather than relying on a fixed amount of liquid, because the amount of heat to be rejected varies with the load on the compressor. A pulsed solenoid valve can be used as a means of control, such that the rate of liquid injection can be varied. Conventional means of controlling the solenoid valve, i.e., in proportion to motor temperature, produce motor temperature variation of 28 to 56°C (50 to 100 degrees F). Some variation in temperature is expected, because the motor is designed to run at about 93°C (200 degrees F) when properly cooled, while the temperature of the refrigerant liquid is typically 5°C (41 degrees F)· Preferably, the operating temperature of the motor should be kept within about 14°C (25 degrees Fahrenheit) of setpoint. As previously mentioned, motor load varies widely, so the need for heat removal also varies during operation. Under steady-state conditions, simple regulation of the rate of refrigerant injection would provide adequate temperature control.

US-A-5,345,776 discloses an air conditioning controller which performs fuzzy inference based on the indoor conditions detected, thereby determining an optimal temperature and humidity to which air should be supplied into the room and also an optimal amount in which the air should be supplied into the room.

In GB-A-1 441 881 there is described a control circuit according to the preamble of claim 1. More particularly, GB-A-1 441 881 discloses a controller for opening a solenoid valve to divert part of the main gas flow to the pump via the motor windings, so as to supplement fan cooling of the motor when the operating temperature exceeds a critical value.

However, under the widely varying load conditions experienced with air conditioning systems, simple fluid regulation, and regulation as a function of motor winding temperature, have not provided very close control of motor temperature. Minimization of variation in motor operating temperature has been the objective of the control circuit, but this objective has eluded the industry to date.

It is a principal object to this invention to provide improved control over the operating temperature of the motor of an air conditioning compressor, and which addresses the problems inherent in the prior art.

It is another object of the invention to employ fuzzy logic control of fluid injection into the compressor motor as a means of maintaining the operating temperature near the setpoint temperature over a wide range of load conditions.

To achieve this, the control circuit of the invention is characterized by the features claimed in the characterizing part of claim 1.

Basically, according to the invention, the compressor motor is cooled by liquid refrigerant injection into the motor armature.

In accordance with an aspect of this invention, a fuzzy logic control circuit is employed to vary the rate of refrigerant liquid injection based on the temperature of the motor and another measurable operating condition. Fuzzy logic means that (a) the temperature deviations are grouped, rather than treated proportionately or gradually, and that (b) how the controller reacts to a given temperature deviation depends on the other operating condition. In a preferred mode, the other operating condition is the rate that the motor is heating up or cooling down.

In the preferred embodiment, the control circuit determines the duty cycle for the solenoid valve according to a five-by-five matrix of twenty-five blocks, in which temperature deviation is grouped into five or more ranges, including a central range near setpoint, first upper and lower ranges above and below the central range, and second upper and lower ranges above and below the first ranges, respectively. The additional operating condition, i.e., rate of temperature change, is also grouped into five or more ranges including a central range, first upper and lower ranges respectively above and below the central range, and second upper and lower ranges above and below the first ranges. The ranges of the operating temperature deviation and the ranges of rate of temperature change define the blocks of the 5X5 matrix. Each of the blocks of the matrix corresponds to a predetermined value of the contrcl signal.

The control circuit matrix is preferably configured with corresponding values of the control signal as follows:

| | dT/dt< -K°/s | dT/dt between -K and -M°/s | dT/dt between -M and +M°/s | dT/dt between +M and +K °/s | dT/dt > K°/s |
|---|---|---|---|---|---|
| T < Tₛ-J° | DC11 | DC12 | DC13 | DC14 | DC15 |
| T between Tₛ-J° and Tₛ-N° | DC21 | DC22 | DC23 | DC24 | DC25 |
| T between Tₛ-N° and Tₛ+N° | DC31 | DC32 | DC33 | DC34 | DC35 |
| T between Tₛ+N° and Tₛ+J° | DC41 | DC42 | DC43 | DC44 | DC45 |
| T > Tₛ+J° | DC51 | DC52 | DC53 | DC54 | DC55 |

Where T is the operating temperature of the motor armature, dT/dt is the time rate of change of the temperature of the motor armature, Tₛ is a predetermined motor setpoint temperature, J and N are predetermined temperature deviations, where J is greater than N; K and M are predetermined rates of change of temperature, where K is greater than M; and DCll to DC55 are respective values of the control signal. In one preferred embodiment, the solenoid valve can be actuated once during each eight second period, for a duty cycle of zero, one, two, four, or eight seconds. The output duty cycle is computed each eight seconds, based on the following matrix, based on the deviation of operating temperature above or below a predetermined setpoint (e.g. 88°C (190 degrees F)) and on the rate at which the motor is heating up or cooling down. configured to correspond to values of the control signal as follows:

| | dT/dt< - 5.5°C/s (-10°F/s) | dT/dt between 5.5 and -1.1°C/s (-10 and -2°F/s) | dT/dt between - 1.1 and + 1.1°C/s (-2 and +2°F/s) | dT/dt between 1.1 and 5.5°C/s (2 and 10 °F/s) | dT/dt > 5.5°C/s (10°F/s) |
|---|---|---|---|---|---|
| T < 66°C (150°F) | OFF (0 Sec) | OFF | OFF | OFF | OFF |
| T between 66°C and 82°C (150 and 180° F) | OFF | OFF | OFF | OFF | 1 Sec |
| T between 82°C and 93°C (180 and 200°F) | OFF | OFF | OFF | 1 Sec | 2 Sec |
| T between 93° C and 110°C (200 and 230°F) | OFF | OFF | 1 Sec | 2 Sec | 4 Sec |
| T > 110°C (230°F) | OFF | 1 Sec | 2 Sec | 4 Sec | FULL ON (8 Seconds) |

This control concept has provided motor temperature within a 25 degree F variability, which is a significant improvement over previous methods. The disclosed technique employs a 5X5 matrix, which represents the minimum control grid. For finer control over motor temperature, some of the central blocks, i.e., near setpoint, could be further divided. In this scheme, the two control variables are temperature and first time derivative of temperature, dT/dt. In some control environments, the second time derivative of temperature, d²T/dt² might be useful. This would be a temperature acceleration, and could indicate thermal runaway, for instance.

The above and many other objects, features, and advantages of this invention will become apparent from the ensuing description of a preferred embodiment, which should be read in connection with the accompanying Drawing.

Fig. 1 is a perspective view of an air conditioning system employing liquid injection cooling and a fuzzy logic controller according to one embodiment of this invention.

Fig. 2 is a control matrix illustrating the fuzzy logic control principle of this invention.

Fig. 3 is a control matrix according to one practical embodiment of this invention.

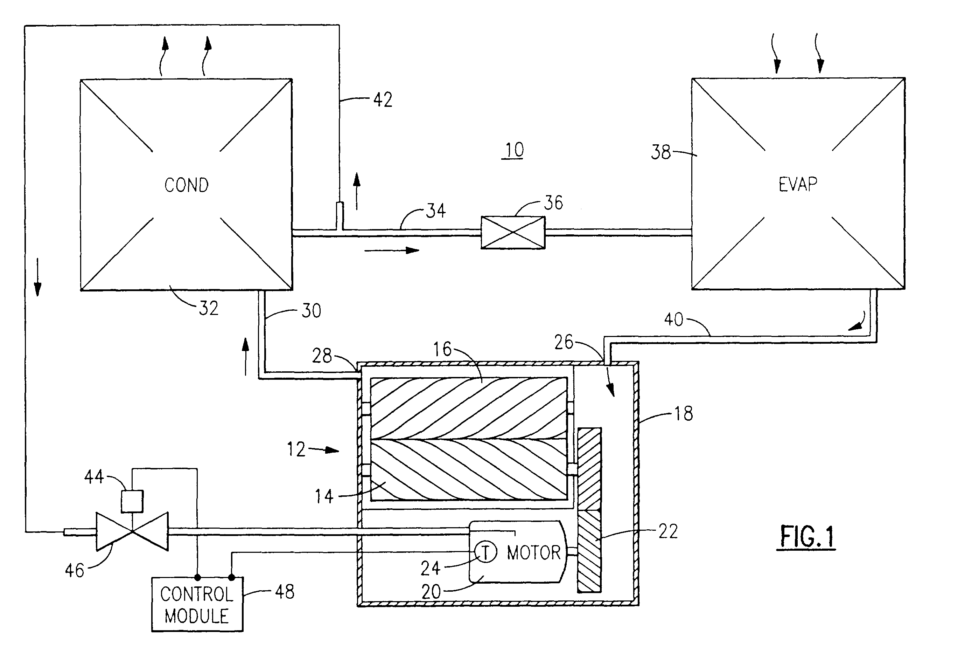

With reference to the Drawing, and initially to Fig. 1, the invention can be embodied as a motor cooling control for a large commercial air conditioning or heat pump system 10, here employing one or more than one screw type compressor 12. The compressor of this type has a first screw 14 and a second screw 16, contained in a sealed housing 18. An electric drive motor 20 is also contained in the housing 18, as are drive gears 22 that link the motor with the screws 14 and 16. Rotation of these screws 14,16 compresses a refrigerant vapor and imposes a mechanical load on the motor 20. A temperature sensor 24 is disposed in thermal contact with the windings or armature of the motor 20, and has a resistance that changes value as a function of motor temperature.

Refrigerant enters an inlet 26 of the compressor 12 as a low pressure vapor and is compressed and departs the compressor at an outlet 28 as a high pressure vapor. A conduit 30 carries the high pressure vapor to a condenser heat exchanger 32, in which heat is exhausted from the high pressure vapor to condense the refrigerant to a liquid. The liquid refrigerant passes along a conduit 34 and through an expansion valve 36 to an evaporator heat exchanger 38. Here liquid enters the evaporator at low pressure and evaporates, absorbing heat from an indoor environment.
The resulting refrigerant vapor then passes along a conduit 40 to the inlet 26 of the compressor, and the compression/evaporation cycle is repeated.

The motor 20 can have its temperature vary widely with the load imposed by the compressor 12. That is the amount of heat that must be removed from the motor armature depends on the load. A liquid cooling injection path 42 here serves as a means for controlling the operating temperature of the motor 20. The path 42 brings liquid refrigerant from the conduit 34, downstream of the condenser 32, to a solenoid valve 44. The liquid passes through the valve 44 and through a controlled orifice 46 into the armature of the motor 20. The injected liquid evaporates to absorb hear from the motor armature, and the resulting vapor joins the vapor provided to the inlet 26, and repeats the compression/evaporation cycle.

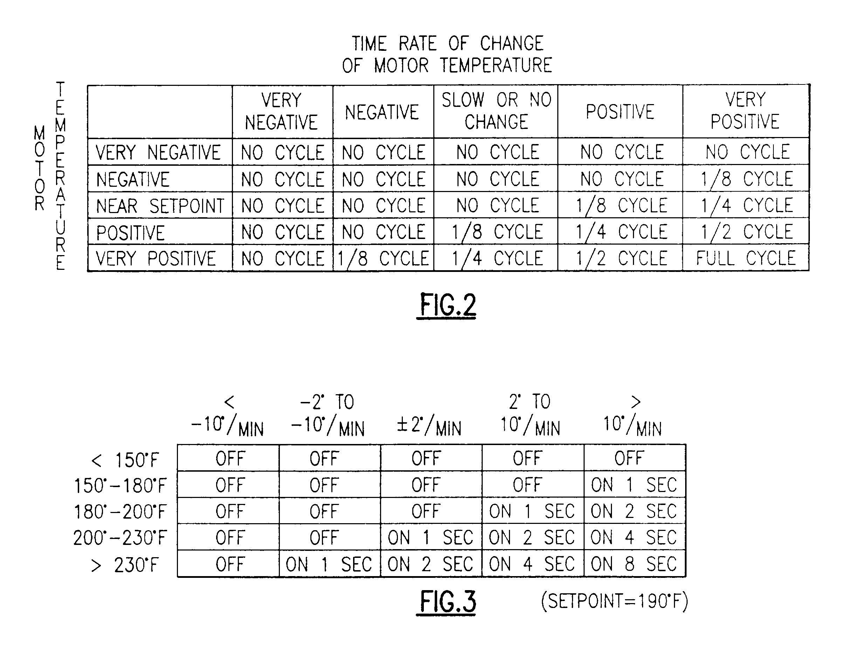

A control module 48 employs so-called "fuzzy logic" control, described here, as a means to control the actuation of the solenoid valve 44. Fuzzy logic control relies on two variables, each of which can be in a middle, normal zone (near a midrange, stable value), negative and positive zones below and above the middle zone, and extreme zones that are very negative or very positive with respect to the values of the middle zones. In this embodiment the control module has an input terminal coupled to the temperature sensor 24 and an output terminal that is provides a control signal to the solenoid valve. The output signal is an ON/OFF signal with an eight second period. The duty cycle of the control signal is computed once each eight seconds, based on the block or zone occupied by the two variables in the fuzzy logic matrix. Here, the duty cycle, or ON time is a "fuzzified" value, that is a single discrete value for each block in the matrix of Fig. 2.

As shown in Fig. 2, the fuzzy control matrix has five columns and five rows, with columns representing very negative rate of temperature variation (rapid cooling), negative rate of temperature change (slow coolinq), more or less stable, or no change, positive temperature rise, and very positive temperature rise (rapid heating). The rows represent the static motor temperature, i.e., the difference between operating temperature and setpoint. There are five rows, representing very negative temperature (well below setpoint), negative (below setpoint), near setpoint, positive, and very positive temperature (well above setpoint). The matrix blocks or squares each define a condition represented by a temperature condition and a rate of change of temperature, and for each block there is a given discrete control signal, i.e., a fixed duty cycle for all temperatures and rates of temperature change in that block.

In a preferred embodiment, as illustrated in the matrix of Fig. 3, motor temperature is very negative if it is 22°C (40°F) or more below setpoint, the latter in this example being 88°C (190°F). The negative zone is between 5.5 and 22°C (10 and 40°F) below setpoint, and the normal zone is within plus or minus 5.5°C (10°F) from the setpoint temperature. Positive temperature means between 5.5 and 22°C (10° and 40°F) above setpoint, and very positive means more than 22°C (40°F) above setpoint. The rate of change of motor temperature is arranged in five columns, with very negative being cooling at a rate of 5.5°C (10°F) per minute or more, negative meaning cooling at a rate of 1.1 to 5.5°C (2° to 10°F) per minute, stable or no change being plus or minus 1.1°C (2°F) or less per minute, positive meaning heating up at a rate between 1.1 and 5.5°C (2° and 10°F) per minute, and very positive meaning a rate of temperature rise above 5.5°C (10°F) per minute. The duty cycles for actuation of the solenoid valve are OFF (a duty cycle of 0 seconds per 8 seconds), 1/8 (ON for one second each cycle), 1/4 (ON for two seconds for each cycle), 1/2 (ON for 4 seconds each cycle) and FULL ON (ON for 8 seconds for each 8-second cycle).

In one practical realization, this fuzzy logic control has achieved temperature maintenance within 14°C (25 degrees F), which is a significant improvement over previous methods.

While this embodiment employs motor temperature and first time derivative of motor temperature, other embodiments may employ different parameters, for example the second time derivative of temperature. Also other load factors such as motor current demand or shaft torque could be employed as input variables for fuzzy logic control. Moreover, a finer, more precise control of motor temperature could be achieved, if needed, by employing more columns or more rows in the control matrix, especially in the regions near the setpoint and no-change regions.

While this invention has been described in detail with reference to an embodiment that exemplifies the preferred mode, it is to be understood that the invention is not limited to that embodiment. Rather, many modifications and variations will present themselves to persons skilled in the art without departing from the invention as defined in the appended claims.

## Claims

1. A control circuit for controlling the injection of a refrigerant into an armature of a compressor motor (20) of a refrigeration/air conditioning system (10) to control the operating temperature of the motor (20) under a range of loads,
wherein the refrigeration/air conditioning system (10) includes said compressor (12) which receives a refrigerant vapor at low pressure at an inlet (26), compresses said refrigerant vapor and delivers said refrigerant vapor at a high pressure at an outlet (28),and a condenser means (32) coupled to said compressor outlet (28) exhausts heat from said refrigerant vapor to condense same to a high pressure liquid,
said control circuit comprising a controller (48), a solenoid valve (44) controlled by a control signal from said controller (48), and a sensor (24) disposed in communication with said motor (20) armature, said sensor (24) being coupled to an input of said controller (48) to supply same with one or more sensor signals that represent the operating condition of said motor (20) armature,
characterized in that said control circuit comprises a liquid injection line (42) for supplying liquid refrigerant to said motor (20) armature, said solenoid valve (44) being disposed in said liquid line (42) for selectively admitting said liquid refrigerant into said motor (20) armature so as to cool said motor (20), and
in that said controller (48) employs a fuzzy logic control to vary the rate of liquid refrigerant injection, said controller (48) converting said sensor signal into a temperature deviation of the operating temperature from a predetermined temperature setpoint, and also determining an additional, quantizable operating condition of said motor (20) armature, and supplies said control signal with a duty cycle that varies as a function of the motor operating temperature and of the additional operating condition.

2. The control circuit of claim 1, characterized in that said controller (48) determines the duty cycle of said control signal according to a matrix of five-by-five blocks, in which
said temperature deviation is grouped into five or more ranges, including a central range near said setpoint, first upper and lower ranges above and below said central range, and second upper and lower ranges above and below said first ranges, respectively, and
said additional operating condition is also grouped into five or more ranges including a central range, first upper and lower ranges respectively above and below said central range, and second upper and lower ranges above and below said first ranges, respectively, such that the ranges of the operating temperature deviation and said other operating condition define the blocks of said matrix, and
in that said control signal has a predetermined value for each of the blocks of said matrix.

3. The control circuit of claim 1, characterized in that said sensor (24) is a temperature sensor (24) disposed in thermal contact with said motor (20) armature to supply said controller (48) with a temperature signal that represents the operating temperature of said motor (20) armature, and
in that said controller (48) converts said temperature signal into a measure of a temperature deviation of the operating temperature from a predetermined temperature setpoint, and also determines the time rate of change of the operating temperature of said motor (20) armature, and supplies said control signal with a duty cycle that varies as a function of the motor operating temperature and of the time rate of change of the operating temperature.

4. The control circuit of claim 3, characterized in that said controller (48) determines the duty cycle of said control signal according to a matrix of five-by-five blocks, in which said temperature deviation is grouped into five or more ranges, including a central range near said setpoint, first upper and lower ranges above and below said central range, and second upper and lower ranges above and below said first ranges, respectively, and said time rate of change of temperature is also grouped into five or more ranges including a central range, first upper and lower ranges respectively above and below said central range, and second upper and lower ranges above and below said first ranges, respectively, such that the ranges of the operating temperature deviation and of said time rate of change of temperature define the blocks of said matrix, and
in that said control signal has a predetermined value for each of the blocks of said matrix.

5. The control circuit of claim 4, characterized in that said matrix for the fuzzy logic control is configured to correspond to values of the control signal as follows:
| | dT/dt< - K°/s | dT/dt between - K and -M °/s | dT/dt between - M and +M °/s | dT/dt between +M and + K °/s | dT/dt > K°/s |
|---|---|---|---|---|---|
| T < Tₛ-J° | DC11 | DC12 | DC13 | DC14 | DC15 |
| T between Tₛ-J° and Tₛ-N° | DC21 | DC22 | DC23 | DC24 | DC25 |
| T between Tₛ-N° and Tₛ+N° | DC31 | DC32 | DC33 | DC34 | DC35 |
| T between Tₛ+N° and Tₛ+J° | DC41 | DC42 | DC43 | DC44 | DC45 |
| T > Tₛ+J° | DC51 | DC52 | DC53 | DC54 | DC55 |
Where
T is the operating temperature of the motor armature,
dT/dt is the time rate of change of the temperature of the motor armature,
Tₛ is a predetermined motor setpoint temperature,
J and N are predetermined temperature deviations, where J is greater than N,
K and M are predetermined rates of change of temperature, where K is greater than M, and
DC11 to DC55 are respective values of the control signal.

6. The control circuit of claim 5, characterized in that said values DC11 to DC55 are discrete values.

7. A refrigeration/air conditioning system (10) including the control circuit of claim 1, characterized in that said compressor (12) is a screw compressor (12) and said motor (20) is confined within a sealed case (18) of the compressor (12), such that vapor that evolves from the liquid refrigerant that is admitted into the motor (20) armature is compressed in the screw compressor (12).

## Patentansprüche

1. Steuerschaltung zum Steuern der Einspritzung eines Kältemittels in einen Anker eines Verdichtermotors (20) einer Kälteerzeugungs-/Klimaanlage (10) zum Steuern der Betriebs-temperatur des Motors (20) in einem Bereich von Lasten,
wobei die Kälteerzeugungs-/Klimaanlage (10) den Verdichter (12) beinhaltet, der einen Kältemitteldampf mit niedrigem Druck an einem Einlaß (26) empfängt, den Kältemitteldampf verdichtet und den Kältemitteldampf mit einem hohen Druck an einem Auslaß (28) abgibt, und eine mit dem Verdichterauslaß (28) gekoppelte Kondensatoreinrichtung (32) dem Kältemitteldampf Wärme entzieht, um denselben in eine Flüssigkeit mit hohem Druck zu kondensieren, und
wobei die Steuerschaltung eine Steuereinrichtung (48), ein Magnetventil (44), das durch ein Steuersignal von der Steuereinrichtung (48) gesteuert wird, und einen in Kommunikation mit dem Anker des Motors (20) angeordneten Sensor (24) umfaßt, wobei der Sensor (24) an einen Eingang der Steuereinrichtung (48) gekoppelt ist, um derselben ein oder mehr Sensorsignale zuzuführen, die den Betriebszustand des Ankers des Motors (20) repräsentieren,
dadurch gekennzeichnet, daß die Steuerschaltung eine Flüssigkeitseinspritzleitung (42) zum Zuführen flüssigen Kältemittels zu dem Anker des Motors (20) umfaßt, wobei das Magnetventil (44) in der Flüssigkeitsleitung (42) angeordnet ist zum selektiven Einlassen des flüssigen Kältemittels in den Anker des Motors (20), um den Motor (20) zu kühlen,
und daß die Steuereinrichtung (48) eine Fuzzy-Logik-Steue-rung verwendet zum Variieren der Einspritzrate flüssigen Kältemittels, wobei die Steuereinrichtung (48) das Sensorsigna! in eine Temperaturabweichung der Betriebstemperatur von einem vorbestimmten Temperatursollwert konvertiert, ferner einen zusätzlichen, quantisierbaren Betriebszustand des Ankers des Motors (20) ermittelt und das Steuersignal mit einem Schaltverhältnis, das sich in Abhängigkeit von der Motorbetriebstemperatur und dem zusätzlichen Betriebszustand ändert, zuführt.

2. Steuerschaltung nach Anspruch 1, dadurch gekennzeichnet, daß die Steuereinrichtung (48) das Schaltverhältnis des Steuersignals in Übereinstimmung mit eine Matrix von fünf mal fünf Blöcken ermittelt, in der
die Temperaturabweichung in fünf oder mehr Bereiche zusammengefaßt ist, beinhaltend einen mittleren Bereich nahe dem Sollwert, einen ersten oberen und einen ersten unteren Bereich oberhalb bzw. unterhalb des mittleren Bereichs und einen zweiten oberen und einen zweiten unteren Bereich oberhalb bzw. unterhalb der ersten Bereiche, und
der zusätzliche Betriebszustand ebenfalls in fünf oder mehr Bereiche zusammengefaßt ist, beinhaltend einen mittleren Bereich, einen ersten oberen und einen ersten unteren Bereich oberhalb bzw. unterhalb des mittleren Bereichs und einen zweiten oberen und einen zweiten unteren Bereich oberhalb bzw. unterhalb der ersten Bereiche, so daß die Bereiche der Betriebstemperaturabweichung und des weiteren Betriebszustands die Blöcke der Matrix definieren, und
daß das Steuersignal einen vorbestimmten Wert für jeden Block der Matrix hat.

3. Steuerschaltung nach Anspruch 1, dadurch gekennzeichnet, daß der Sensor (24) ein in thermischem Kontakt mit dem Anker des Motors (20) angeordneter Temperatursensor (24) ist zum Zuführen eines Temperatursignals, das die Betriebstemperatur des Ankers des Motors (20) repräsentiert, zu der Steuereinrichtung (48), und
daß die Steuereinrichtung (48) das Temperatursignal in ein Maß einer Temperaturabweichung der Betriebstemperatur von einem vorbestimmten Temperatursollwert konvertiert, ferner die zeitliche Änderung der Betriebstemperatur des Ankers des Motors (20) ermittelt und das Steuersignal mit eineni Schaltverhältnis. das sich in Abhängigkeit von der Motorbetriebstemperatur und der zeitlichen Änderung der Betriebstemperatur ändert, zuführt.

4. Steuerschaltung nach Anspruch 3, dadurch gekennzeichnet, daß die Steuereinrichtung (48) das Schaltverhältnis des Steuersignals in Übereinstimmung mit einer Matrix von fünf mal fünf Blöcken bestimmt, in der die Temperaturabweichung in fünf oder mehr Bereichen zusammengefaßt ist, beinhaltend einen mittleren Bereich nahe dem Sollwert, einen ersten oberen und einen ersten. unteren Bereich oberhalb bzw. unterhalb des mittleren Bereichs, und einen zweiten oberen und einen zweiten unteren Bereich oberhalb bzw. unterhalb der ersten Bereiche, und
die zeitliche Änderung der Temperatur ebenfalls in fünf oder mehr Bereiche zusammengefaßt ist, beinhaltend einen mittleren Bereich, einen ersten oberen und einen ersten unteren Bereich oberhalb bzw. unterhalb des mittleren Bereichs, und einen zweiten oberen und einen zweiten unteren Bereich oberhalb bzw. unterhalb der ersten Bereiche, so daß die Bereiche der Betriebstemperaturabweichung und der zeitlichen Änderung der Temperatur die Blöcke der Matrix definieren, und
daß das Steuersignal einen vorbestimmten Wert für jeden Block der Matrix hat.

5. Steuerschaltung nach Anspruch 4. dadurch gekennzeichnet, daß die Matrix der Fuzzy-Logik-Steuerung so konfiguriert ist, daß sie Werten des Steuersignals wie folgt entspricht:
| | dT/dt < -K°/s | dT/dt zwischen - K und -M °/s | dT/dt zwischen - M und +M °/s | dT/dt zwischen +M und +K °/s | dT/dt > K°/s |
|---|---|---|---|---|---|
| T < Tₛ-J° | DC11 | DC12 | DC13 | DC14 | DC15 |
| T zwischen Tₛ - J° und Tₛ-N° | DC21 | DC22 | DC23 | DC24 | DC25 |
| T zwischen Tₛ - N° und Tₛ+N° | DC31 | DC32 | DC33 | DC34 | DC35 |
| T zwischen Tₛ+N° und Tₛ+j° | DC41 | DC42 | DC43 | DC44 | DC45 |
| T > Tₛ+J° | DC51 | DC52 | DC53 | DC54 | DC55 |
worin
T die Betriebstemperatur des Motorankers ist,
dT/dt die zeitliche Änderung der Temperatur des Motorankers ist,
Tₛ eine vorbestimmte Motor-Solltemperatur ist,
J und N vorbestimmte Temperaturabweichungen sind, mit J größer als N;
K und M vorbestimmte Änderungsgeschwindigkeiten der Temperatur sind, mit K größer als M; und
DC11 bis DC55 jeweilige Werte des Steuersignals sind.

6. Steuerschaltung nach Anspruch 5, dadurch gekennzeichnet, daß die Werte DC11 bis DC55 diskrete Werte sind.

7. Kälteerzeugungs-/Klimaanlage(10) mit der Steuerschaltung nach Anspruch 1, dadurch gekennzeichnet, daß der Verdichter (12) ein Schraubenverdichter (12) ist und der Motor (20) in einem dicht verschlossenen Gehäuse (18) des Verdichters (12) eingeschlossen ist, so daß Dampf, der aus dem in den Motor (20) eingeleiteten flüssigen Kältemittel austritt, in dem Schraubenverdichter (12) verdichtet wird.

## Revendications

1. Circuit de commande pour commander l'injection d'un réfrigérant dans l'induit d'un moteur de compresseur (20) d'un système de réfrigération/-conditionnement de l'air (10) pour régler la température de fonctionnement du moteur (20) sous une gamme de charges,
dans lequel le système de réfrigération/conditionnement de l'air (10) englobe ledit compresseur (12) qui reçoit une vapeur de réfrigérant à basse pression à une entrée (26), qui comprime ladite vapeur de réfrigérant et qui délivre ladite vapeur de réfrigérant sous haute pression à une sortie (28), et un moyen de condenseur (32) couplé à ladite sortie (28) du compresseur aspire de la chaleur de ladite vapeur de réfrigérant pour la condenser en un liquide haute pression,
ledit circuit de commande comprenant un dispositif de commande (48), une soupape électromagnétique (44) commandée par un signal de commande provenant dudit dispositif de commande (48) et un capteur (24) disposé en communication avec l'induit dudit moteur (20), ledit capteur (24) étant couplé à une entrée dudit dispositif de commande (48) pour acheminer cette dernière de manière conjointe avec un ou plusieurs signaux du capteur qui représentent la condition de fonctionnement de l'induit dudit moteur (20),
caractérisé en ce que ledit circuit de commande comprend une conduite d'injection de liquide (42) pour approvisionner en réfrigérant liquide l'induit dudit moteur (20), ladite soupape électromagnétique (34) étant disposée dans ladite conduite (42) pour le liquide afin d'admettre de manière sélective ledit réfrigérant liquide dans l'induit dudit moteur (20) de façon à refroidir ledit moteur (20), et
en ce que ledit dispositif de commande (48) utilise une commande à logique floue pour faire varier le débit d'injection du réfrigérant liquide, ledit dispositif de commande (48) transformant ledit signal du capteur en une déviation de la température de fonctionnement par rapport à une valeur de consigne de température prédéterminée, et déterminant également une condition de fonctionnement quantifiable supplémentaire de l'induit dudit moteur (20), et achemine ledit signal de commande avec un cycle de service qui varie en fonction de la température de fonctionnement du moteur et de la condition de fonctionnement supplémentaire.

2. Circuit de commande selon la revendication 1, caractérisé en ce que ledit dispositif de commande (48) détermine le cycle de service dudit signal de commande en fonction d'une matrice de cinq-par-cinq blocs, dans lequel
ladite déviation de température est regroupée en cinq intervalles ou plus, y compris un intervalle central proche de ladite valeur de consigne, des premiers intervalles supérieur et inférieur au-dessus et en dessous dudit intervalle central et des seconds intervalles supérieur et inférieur au-dessus et en dessous desdits premiers intervalles respectivement, et
ladite condition de fonctionnement supplémentaire est également regroupée en cinq intervalles ou plus englobant un intervalle central, des premiers intervalles supérieur et inférieur respectivement au-dessus et en dessous dudit intervalle central, et des seconds intervalles supérieur et inférieur au-dessus et en dessous desdits premiers intervalles respectivement, de telle sorte que les intervalles de la déviation de la température de fonctionnement et ladite autre condition de fonctionnement définissent les blocs de ladite matrice, et
en ce que ledit signal de commande possède une valeur prédéterminée pour chacun des blocs de ladite matrice.

3. Circuit de commande selon la revendication 1, caractérisé en ce que ledit capteur (24) est un capteur de température (24) disposé en contact thermique avec l'induit dudit moteur (20) pour acheminer audit dispositif de commande (48) un signal de température qui représente la température de fonctionnement de l'induit dudit moteur (20), et
en ce que ledit dispositif de commande (48) transforme ledit signal de température en une mesure d'une déviation de la température de fonctionnement par rapport à une valeur de consigne de température prédéterminée, et détermine également le laps de temps correspondant au changement de la température de fonctionnement de l'induit dudit moteur (20), et achemine ledit signal de commande avec un cycle de service qui varie en fonction de la température de fonctionnement du moteur et du laps de temps correspondant au changement de la température de fonctionnement.

4. Circuit de commande selon la revendication 3, caractérisé en ce que ledit dispositif de commande (48) détermine le cycle de service dudit signal de commande en fonction d'une matrice de cinq-par-cinq blocs, dans lequel ladite déviation de température est regroupée en cinq intervalles ou plus, y compris un intervalle central proche de ladite valeur de consigne, des premiers intervalles supérieur et inférieur au-dessus et en dessous dudit intervalle central et des seconds intervalle supérieur et inférieur au-dessus et en dessous desdits premiers intervalles respectivement, et ledit laps de temps correspondant au changement de température est également regroupé en cinq intervalles ou plus englobant un intervalle central, des premiers intervalles supérieur et intérieur respectivement au-dessus et en dessous dudit intervalle central, et des seconds intervalles supérieur et inférieur au-dessus et en dessous desdits premiers intervalles respectivement, de telle sorte que les intervalles de la déviation de la température de fonctionnement et ladite autre condition de fonctionnement définissent les blocs de ladite matrice, et
en ce que ledit signal de commande possède une valeur prédéterminée pour chacun des blocs de ladite matrice.

5. Circuit de commande selon la revendication 4, caractérisé en ce que ladite matrice pour la commande à logique floue est configurée pour correspondre à des valeurs du signal de commande comme suit:
| | dT/dt< - K°/s | dT/dt entre - K et -M °/s | dT/dt entre - M et +M °/s | dT/dt entre +M et + K °/s | dT/dt > K°/s |
|---|---|---|---|---|---|
| T < Tₛ-J° | DC11 | DC12 | DC13 | DC14 | DC15 |
| T entre Tₛ-J° et Tₛ-N° | DC21 | DC22 | DC23 | DC24 | DC25 |
| T entre Tₛ-N° et Tₛ+N° | DC31 | DC32 | DC33 | DC34 | DC35 |
| T entre Tₛ+N° et Tₛ+J° | DC41 | DC42 | DC43 | DC44 | DC45 |
| T > Tₛ+J° | DC51 | DC52 | DC53 | DC54 | DC55 |
où
T représente la température de fonctionnement de l'induit du moteur,
dT/dt représente le laps de temps correspondant au changement de la température de l'induit du moteur,
T_{S} représente la température de consigne du moteur prédéterminée,
J et N représentent des déviations de température prédéterminée, J étant supérieure à N,
K et M représentent les vitesses prédéterminées du changement de la température, K étant supérieur à M, et
DC11 à DC55 représentent des valeurs respectives du signal de commande.

6. Circuit de commande selon la revendication 5, caractérisé en ce que lesdites valeurs DC11 à DC55 sont des valeurs discrètes.

7. Système de réfrigération/conditionnment de l'air (10) englobant le circuit de commande selon la revendication 1, caractérisé en ce que ledit compresseur (12) est un compresseur à vis (12) et ledit moteur (20) est confiné dans un boîtier (18) rendu étanche du compresseur (12), si bien que la vapeur qui séchappe du réfrigérant liquide qui est admis dans l'induit du moteur (20) est comprimée dans le compresseur à vis (12).
